# FASCICULE DE BREVET EUROPEEN

(11) **EP 4 089 268 B1**
(45) Date de publication et mention de la délivrance du brevet: **27.03.2024**
(21) Numéro de dépôt: 22172409.9
(22) Date de dépôt: 09.05.2022
(51) Int. Cl.: F01N 3/20

(54) **MOTEUR À COMBUSTION INTERNE ÉQUIPÉ DE MOYENS DE PRÉCHAUFFAGE D'UN CATALYSEUR DE DÉPOLLUTION DES GAZ BRULÉS**
VERBRENNUNGSMOTOR MIT MITTELN ZUM VORHEIZEN EINES KATALYSATORS ZUR ABGASREINIGUNG
INTERNAL COMBUSTION ENGINE EQUIPPED WITH MEANS FOR PREHEATING A CATALYST FOR DEPOLLUTING BURNT GAS

(30) Priorité: 11.05.2021 FR 2104972
(43) Date de publication de la demande: 16.11.2022
(73) Titulaire: NEW H POWERTRAIN HOLDING, S.L.U., 47008 Valladolid (ES)
(72) Inventeur: FASOLO, BERTRAND, 95210 LARDY (FR)

(56) Documents cités:
- DE-A1- 4 435 213
- FR-A1- 3 101 112
- JP-A- H05 240 027
- US-A1- 2010 205 939
- US-A1- 2019 063 352
- US-A1- 2019 353 108

## Description

### DOMAINE TECHNIQUE DE L'INVENTION

La présente invention concerne de manière générale la réduction des émissions polluantes des moteurs à combustion interne.

Elle concerne plus particulièrement un moteur à combustion interne comprenant une chambre de combustion, une ligne d'admission d'air frais débouchant dans la chambre de combustion, une ligne d'échappement de gaz brûlés hors de la chambre de combustion qui comprend au moins un système de post-traitement des gaz brûlés comprenant un catalyseur et des moyens de chauffage des gaz brûlés situés d'un premier côté du catalyseur, et une pompe à vide qui comporte une entrée et qui est adaptée à établir, dans ladite entrée, une pression d'air inférieure à la pression atmosphérique.

L'invention trouve une application particulièrement avantageuse dans les moteurs à allumage commandé (Essence) mais elle pourrait aussi s'appliquer aux moteurs à allumage par compression (Diesel).

Elle concerne également un véhicule automobile équipé d'un tel moteur et un procédé de pilotage d'un tel moteur.

### ETAT DE LA TECHNIQUE

On recherche actuellement, dans un cadre législatif toujours plus contraignant et dans un souci de préservation de l'environnement, des solutions techniques permettant d'améliorer le fonctionnement des moteurs à combustion interne, notamment pour réduire le taux d'éléments polluants contenus dans les gaz brûlés qui sont rejetés par les moteurs dans l'atmosphère.

Pour réduire ces émissions polluantes, un moteur à combustion interne comporte généralement, dans sa ligne d'échappement, un système de post-traitement des gaz brûlés comprenant au moins un catalyseur de dépollution au sein duquel des réactions chimiques se produisent afin de transformer des composés polluants en composés sans effet sur la santé.

Ce catalyseur, par exemple un catalyseur trois voies dans le cas d'un moteur à allumage commandé, fonctionne de manière optimale sur une plage de températures comprise entre 150 et 350 degrés Celsius. Il présente en revanche des performances fortement réduites à température ambiante, juste après le démarrage à froid du moteur. En conséquence, la majeure partie des polluants rejetés dans l'atmosphère est émise dans les minutes qui suivent la phase de démarrage à froid du moteur.

Avec l'arrivée de nouvelles normes concernant les véhicules automobiles (notamment Euro7), il a été décidé que cette situation ne pouvait pas perdurer.

Une solution pour améliorer l'efficacité du catalyseur consisterait alors à le dimensionner en fonction de son rendement à basses températures, en augmentant sa taille. Néanmoins, étant donné le prix élevé des matériaux précieux utilisés pour fabriquer un tel catalyseur, il apparait difficile de limiter le phénomène de rejets polluants par ce biais.

Une autre solution consiste à favoriser le réchauffement rapide du catalyseur avant le démarrage du moteur. Une telle solution est exposée dans les documents FR2778206 ou JPH05240027A. Elle consiste à prévoir, dans la ligne d'échappement du moteur, une grille de préchauffage située en amont du catalyseur, ainsi qu'une pompe de circulation d'air pour forcer l'air réchauffé par la grille à traverser le catalyseur pour en augmenter la température avant même le démarrage du moteur.

Cette solution, bien qu'efficace, s'avère coûteuse à mettre en oeuvre car elle nécessite une pompe à air dédiée.

### PRESENTATION DE L'INVENTION

Afin de remédier à l'inconvénient précité de l'état de la technique, la présente invention propose d'utiliser des moyens qui existent déjà dans les moteurs à combustion interne afin de favoriser la montée en température du catalyseur avant même le démarrage du moteur.

Plus particulièrement, on propose selon l'invention un moteur à combustion interne tel que défini dans l'introduction, dans lequel il est prévu :
- une ligne de préchauffage qui communique à une première extrémité avec ladite entrée de la pompe à vide, qui débouche à une seconde extrémité dans la ligne d'échappement, d'un second côté du catalyseur, et qui comporte une réserve d'air et des moyens d'isolation de la réserve d'air aptes à ouvrir ou fermer la ligne de préchauffage de part et d'autre de la réserve d'air, et
- une ligne de prise d'air qui, à une extrémité, communique avec l'extérieur, et, à une autre extrémité, débouche dans la ligne d'échappement, du côté opposé au catalyseur par rapport aux moyens de chauffage.

Avant de détailler les avantages procurés par l'invention, on peut rappeler que dans un système d'assistance pneumatique au freinage d'un véhicule automobile, un servofrein est classiquement interposé entre la pédale de frein du véhicule et les freins eux-mêmes. Un tel servofrein comporte un maître-cylindre et un amplificateur qui permet d'amplifier l'effort exercé par le conducteur sur la pédale au niveau du maître-cylindre.

Le servofrein est relié pour cela à une pompe à vide délivrant une pression inférieure à la pression atmosphérique et l'amplificateur comprend une membrane interne qui est soumise à un écart de pression entre la pression atmosphérique et la basse pression pour assurer l'assistance pneumatique.

Lorsque le système de freinage n'est pas sollicité, la pompe à vide aspire un débit d'air très faible voire nul, correspondant principalement aux éventuelles fuites d'air. En d'autres termes, la pompe à vide d'un tel système doit aspirer de l'air de façon irrégulière, principalement lorsque le système de freinage est sollicité. La pompe à vide est ainsi continûment en service, y compris lorsque le système de freinage n'est pas sollicité, ce qui provoque des pertes inutiles d'énergie.

L'invention propose alors de tirer profit de cette énergie en utilisant la dépression que la pompe à vide génère en continu afin de mettre la réserve d'air de la ligne de préchauffage sous vide d'air. Alors, juste avant le démarrage du moteur, il sera possible d'utiliser cette réserve pour aspirer de l'air au travers des moyens de chauffage des gaz entrant dans le catalyseur et du catalyseur lui-même, afin de provoquer une rapide montée en température de ce dernier.

Ainsi, au moment du démarrage effectif du moteur, le catalyseur aura déjà atteint sa température d'activation, de sorte que les émissions de polluants seront très diminuées pendant cette phase.

D'autres caractéristiques avantageuses et non limitatives du moteur à combustion interne conforme à l'invention, prises individuellement ou selon toutes les combinaisons techniquement possibles, sont les suivantes :
- les moyens de chauffage fonctionnent à l'énergie électrique ;
- les moyens de chauffage comportent une tranche catalyseur ayant un substrat métallique ;
- la tranche de catalyseur présente un volume strictement inférieur à celui du catalyseur ;
- les moyens de chauffage sont situés en amont du catalyseur ;
- la première extrémité de la ligne de préchauffage débouche dans une conduite d'air connectant l'entrée de la pompe à vide à un servofrein à dépression.

L'invention propose également un véhicule automobile comportant des roues, un système de freinage des roues qui comporte un servofrein à dépression, et un groupe motopropulseur qui comporte un moteur à combustion interne tel que précité, dont la pompe à vide est connectée au servofrein à dépression par une conduite d'air.

L'invention porte aussi sur un procédé de pilotage d'un moteur à combustion interne d'un véhicule automobile tel que précité, dans lequel il est prévu d'acquérir un premier paramètre relatif à l'approche ou à l'entrée du conducteur dans le véhicule automobile et un second paramètre relatif à la température du catalyseur et dans lequel, lorsque le premier paramètre indique que le conducteur s'approche ou entre dans le véhicule automobile et que le second paramètre indique que la température du catalyseur est inférieure à un seuil prédéterminé, les moyens de chauffage sont activés puis les moyens d'isolation ouvrent la ligne de préchauffage entre la réserve d'air et la ligne d'échappement.

Préférentiellement alors, après que les moyens d'isolation ont ouvert la ligne de préchauffage entre la réserve d'air et la ligne d'échappement, il est prévu d'attendre que le second paramètre indique que la température du catalyseur dépasse un seuil prédéterminé, puis de refermer la ligne de préchauffage entre la réserve d'air et la ligne d'échappement.

Préférentiellement, il est émis un signal autorisant le démarrage du moteur à combustion interne après que la ligne de préchauffage a été refermée.

Préférentiellement aussi, après le démarrage du moteur, les moyens d'isolation ouvrent la ligne de préchauffage entre la réserve d'air et la pompe à vide.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique d'un moteur à combustion interne selon l'invention, dans un état démarré ;
[Fig. 2] est une vue homologue à celle de la figure 1, sur laquelle le moteur à combustion interne est représenté dans un état de préchauffage ;
[Fig. 3] est un graphique illustrant les variations de différents paramètres lors de la mise en oeuvre d'un procédé conforme à l'invention.

Dans la description, les termes « amont » et « aval » seront utilisés suivant le sens de l'écoulement des gaz, depuis le point de prélèvement de l'air frais dans l'atmosphère jusqu'à la sortie des gaz brûlés dans l'atmosphère.

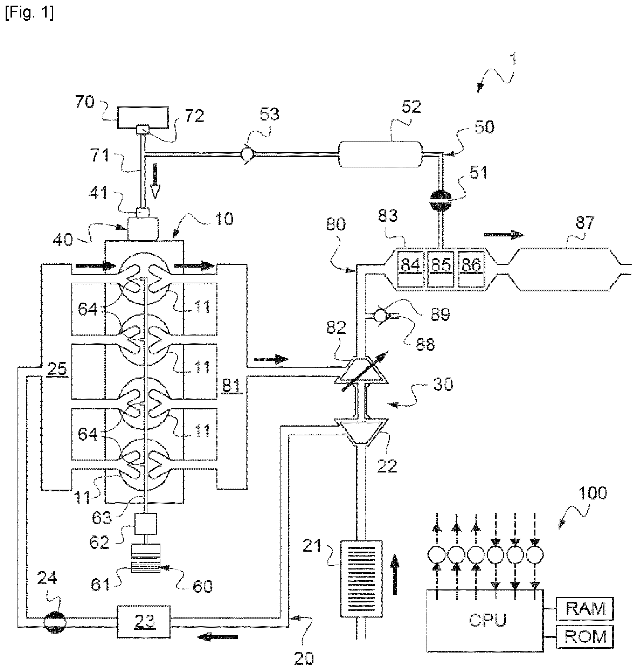

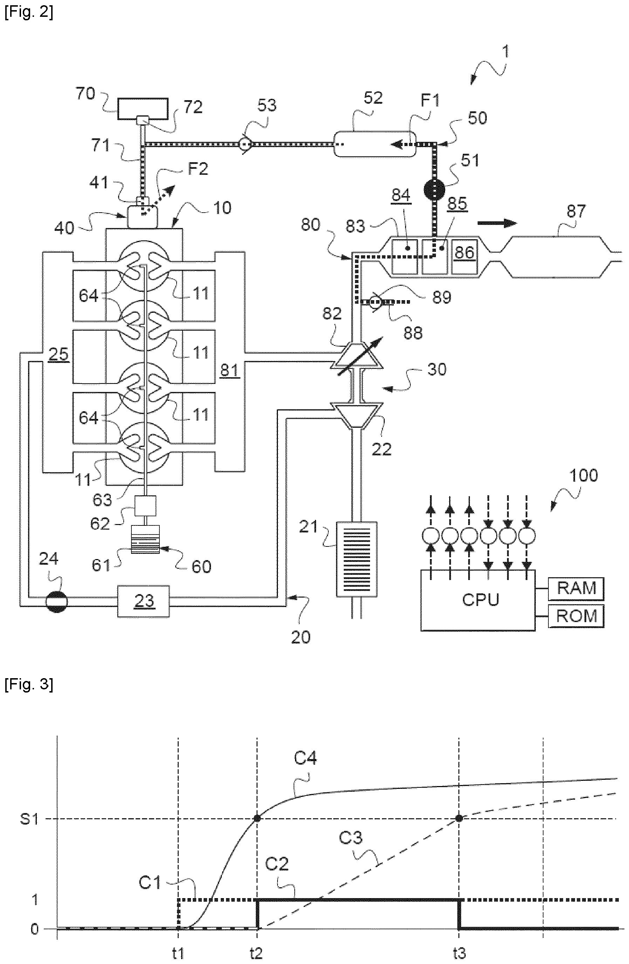

Sur les figures 1 et 2, on a représenté schématiquement un moteur à combustion interne 1 équipant un véhicule automobile.

Il pourrait s'agir d'un véhicule automobile à propulsion hybride, mais on considérera ici qu'il s'agit d'un véhicule à propulsion thermique.

Le moteur à combustion interne 1 comprend un bloc-moteur 10 pourvu d'un vilebrequin et de pistons (non représentés) respectivement logés dans des cylindres 11. Ces cylindres, par exemple au nombre de quatre, délimitent avec leurs pistons une chambre de combustion.

Le moteur à combustion interne est de préférence du type à allumage commandé (à Essence). Par conséquent, il comporte un circuit d'allumage qui comprend notamment des bougies débouchant chacune dans un cylindre 11 de façon à pouvoir y générer une étincelle d'allumage du mélange de combustion.

En variante, le moteur à combustion interne pourrait être du type à allumage par compression (Diesel). Dans cette variante, il serait dépourvu de ce circuit d'allumage.

En amont des cylindres 11, le moteur à combustion interne 1 comporte une ligne d'admission 20 qui prélève l'air frais dans l'atmosphère et qui débouche dans un répartiteur d'air 25 agencé pour répartir l'air frais vers chacun des cylindres 11 du bloc-moteur 10. Cette ligne d'admission 20 comporte, dans le sens d'écoulement de l'air frais, un filtre à air 21 qui filtre l'air frais prélevé dans l'atmosphère, un compresseur 22 qui comprime l'air frais filtré par le filtre à air 21, un refroidisseur d'air principal 23 qui refroidit cet air frais comprimé, et une vanne d'admission 24 qui permet de réguler le débit d'air frais débouchant dans le répartiteur d'air 25.

En sortie des cylindres 11, le moteur à combustion interne 1 comporte une ligne d'échappement 80 qui s'étend depuis un collecteur d'échappement 81 dans lequel débouchent les gaz qui ont été préalablement brûlés dans les cylindres 11, jusqu'à un silencieux d'échappement 87 permettant de détendre les gaz brûlés avant qu'ils ne soient évacués dans l'atmosphère. Elle comporte par ailleurs, dans le sens d'écoulement des gaz brûlés, une turbine 82 et un système de post-traitement 83 pour la dépollution des gaz brûlés du moteur.

La turbine 82 est entraînée en rotation par le flux de gaz brûlés sortant du collecteur d'échappement 81, et elle permet d'entraîner le compresseur 22 en rotation, grâce à des moyens de couplage mécanique tels qu'un arbre de transmission. La turbine 82, le compresseur 22 et l'arbre de transmission forment alors ici un turbocompresseur 30.

En variante, on pourrait prévoir que le moteur soit dépourvu de turbocompresseur.

Le système de post-traitement 83 comporte de préférence une partie qui assure une fonction de catalyse par oxydation et une partie qui assure une fonction de filtration des particules.

Puisque le moteur est ici du genre à allumage commandé, la partie qui assure la fonction de catalyse par oxydation comporte ici un catalyseur 85 qualifié de « trois voies » en ce sens qu'il est prévu pour oxyder principalement les hydrocarbures imbrûlés (HC) et le monoxyde de carbone (CO) contenus dans les gaz brûlés, et qu'en outre il est prévu pour réduire les oxydes d'azote (NOx).

Ce catalyseur comporte de façon classique un substrat, par exemple en céramique, qui est revêtu de métaux précieux (typiquement de platine et/ou palladium et/ou rhodium).

On notera que si le moteur était à allumage par compression (Diesel), le catalyseur 85 serait d'un type différent (typiquement, il pourrait s'agir d'un catalyseur d'oxydation, dit à « deux voies »).

La partie qui assure la fonction de filtration des particules se présente ici sous la forme d'un filtre à particules 86 inerte, prévu pour capter les particules solides en suspension dans les gaz brûlés.

Le moteur à combustion interne 1 peut comporter aussi une ou des ligne(s) de recirculation partielle des gaz brûlés à l'admission (communément appelées lignes EGR, de l'acronyme anglais pour : Exhaust Gas Recycling), prenant naissance dans la ligne d'échappement 80 et débouchant dans la ligne d'admission 20. Ces lignes ne sont pas ici représentées.

Le moteur à combustion interne 1 comporte par ailleurs une ligne d'injection 60 de carburant dans les cylindres 11. Cette ligne d'injection 60 comporte une pompe d'injection 62 agencée pour prélever le carburant dans un réservoir 61 afin de l'amener sous pression dans un rail de distribution 63 qui débouche dans les cylindres 11 via des injecteurs de carburant 64.

Le moteur à combustion interne 1 comporte par ailleurs une pompe à vide 40 qui est adaptée à établir une pression d'air inférieure à la pression atmosphérique.

Cette pompe à vide 40 est de préférence mécanique et actionnée par le vilebrequin du moteur à combustion interne, soit directement, soit indirectement via un arbre à cames, un mécanisme de pignonnerie, de courroie, de chaîne ou autre.

Il s'agit ici d'une pompe à palettes mais tout autre type de pompe ad hoc pourrait être employée.

Cette pompe à vide 40 comporte une entrée 41 par laquelle elle aspire l'air pour créer une dépression, et une sortie par laquelle elle expulse l'air aspiré.

Le véhicule automobile équipé de ce moteur à combustion interne 1 comporte un système de freinage permettant de ralentir le véhicule. Ce système de freinage comporte classiquement une pédale de frein, un servofrein actionné par la pédale de frein, et un circuit de freinage permettant au liquide de frein repoussé par le servofrein d'actionner des étriers de freins.

Ici, le servofrein 70 est du type à dépression. Il comporte ainsi un maître-cylindre actionné par la pédale de frein, et un système pneumatique d'assistance au freinage qui permet d'amplifier l'effort exercé par le conducteur sur la pédale de frein.

Le servofrein 70 est relié à l'entrée 41 de la pompe à vide 40 par une conduite d'air 71. La pompe à vide 40 permet alors d'établir, d'un côté d'une membrane du servofrein 70, une pression inférieure à la pression atmosphérique qui s'applique de l'autre côté de la membrane, ce qui aide le conducteur à freiner.

Ici, ce servofrein 70 comporte un clapet anti-retour 72 adapté à empêcher tout reflux d'air depuis le servofrein 70 vers la pompe à vide 40.

Lorsque le moteur est démarré à froid, il existe un temps de latence pendant lequel le catalyseur 85 n'est pas suffisamment chaud pour que les réactions chimiques d'oxydation se produisent correctement.

L'invention propose alors une solution de préchauffage permettant d'amener rapidement le catalyseur 85 à sa température d'activation, avant même le démarrage effectif du moteur à combustion interne 1.

Cette solution consiste tout d'abord à prévoir en amont du catalyseur 85 des moyens de chauffage des gaz brûlés pénétrant dans le système de post-traitement 83.

Ces moyens de chauffage fonctionnent à l'énergie électrique et sont alimentés en courant par une batterie électrique équipant le véhicule automobile, via un circuit électrique (non représenté) comportant un interrupteur commandé.

Ils sont de préférence situés dans le système de post-traitement 83, au plus près de l'entrée du catalyseur 85.

En pratique, et de manière préférentielle, ces moyens de chauffage sont formés par une tranche électrique de catalyseur, ci-après appelée « catalyseur électrique 84 ».

Ce catalyseur électrique 84 s'étend dans le prolongement du catalyseur 85, en amont de celui-ci, et se distingue de celui-ci essentiellement par son substrat qui est réalisé en matériau métallique et qui fonctionne à la manière d'une résistance électrique.

Ce catalyseur électrique 84 présente de préférence un volume strictement inférieur à celui du catalyseur 85.

L'idée est alors d'utiliser ce catalyseur électrique 84 pour réchauffer les gaz qui le traversent, afin de réchauffer le catalyseur 85. Pour cela, il est nécessaire de faire circuler les gaz au travers du système de post-traitement 83.

Dans ce dessein, le moteur à combustion interne 1 est équipé d'une ligne de préchauffage 50 qui prend naissance dans la ligne d'échappement 80, en aval du catalyseur 85, et qui débouche dans la conduite d'air 71, entre le servofrein 70 et l'entrée 41 de la pompe à vide 40.

Cette ligne de préchauffage 50 permet ainsi d'aspirer une partie des gaz présents dans le système de post-traitement 83, de façon à faire circuler les gaz au travers du catalyseur 85.

Elle prend de préférence naissance entre le catalyseur 85 et le filtre à particules 86, et non en aval de ce filtre, de façon à éviter toute perte de charge inutile lors de la mise en circulation des gaz.

Cette ligne de préchauffage 50 est prévue pour être utilisée lorsque le moteur est à encore à l'arrêt.

Pour que les gaz puissent circuler dans le système de post-traitement 83, il est alors nécessaire de prévoir une ligne de prise d'air 88 qui prend naissance à l'extérieur du moteur, dans l'atmosphère, et qui débouche dans la ligne d'échappement 80, en amont du système de post-traitement 83 et, de préférence, en aval de la turbine 82.

Pour éviter que, lorsque le moteur fonctionne, les gaz brûlés s'échappent par la ligne de prise d'air 88, cette dernière est équipée d'une vanne de mise à l'air libre 89. Il pourrait par exemple s'agir d'une vanne commandée.

Mais, de préférence, pour des raisons de coût, de simplification de la programmation et de fiabilité, cette vanne de mise à l'air libre 89 est formée par un simple clapet anti-retour qui permet à l'air extérieur de s'engouffrer dans la ligne d'échappement 88 lorsque la pression dans cette dernière est inférieure à la pression atmosphérique, mais qui ne permet aucune circulation d'air dans le sens contraire.

Toujours parce que la ligne de préchauffage 50 est prévue pour être utilisée lorsque le moteur est à encore à l'arrêt, c'est-à-dire lorsque la pompe à vide 41 est à l'arrêt, il est ici prévu dans la ligne de préchauffage 50 des moyens de stockage d'un volume d'air à pression réduite. Ces moyens sont prévus pour être utilisés au démarrage du moteur à combustion interne lorsque la pompe à vide est à l'arrêt.

Les moyens de stockage comportent alors une réserve d'air et des moyens d'isolation de cette réserve d'air.

La réserve d'air pourrait être formée par des conduites de sections importantes de la ligne de préchauffage 50. Toutefois, de manière préférentielle, elle comporte un réservoir 52 qui présente un volume au moins égal à un demi-litre, par exemple égal à deux litres environ. Son volume devra être ajusté de façon à pouvoir créer une aspiration d'air pendant l'ensemble de la durée nécessaire pour réchauffer le catalyseur 85.

Ce réservoir 52 présente des propriétés mécaniques telle que la pression d'air en son sein peut être très réduite (par exemple de l'ordre de 0,2 bars) sans qu'il ne s'écrase sur lui-même.

Les moyens d'isolation du réservoir 52 comportent deux vannes respectivement situées de part et d'autre du réservoir.

Il pourrait s'agir de deux vannes commandées.

Mais, de préférence, pour des raisons de coûts, de facilité de programmation et de fiabilité, l'une de ces vannes (ci-après appelé vanne d'arrêt 53), celle située entre le réservoir 52 et la pompe à vide 40, est formée par un simple clapet anti-retour. Elle permet à l'air de sortir du réservoir vers la pompe à vide 40 lorsque la pression dans l'entrée 41 de cette dernière est inférieure à la pression dans le réservoir 52, mais ne permet aucune circulation d'air dans le sens contraire.

L'autre vanne (ci-après appelée vanne commandée 51), celle située entre le réservoir 52 et le système de post-traitement 83, est en revanche prévue pour être pilotée afin de réguler le débit d'air circulant dans la ligne de préchauffage 50 depuis la ligne d'échappement 80 vers le réservoir 52.

L'intérêt de cette vanne commandée 51 est de permettre de fermer la ligne de préchauffage 50 lorsque les conditions ne nécessitent pas de réchauffer le catalyseur 85.

Cette vanne commandée 51 est ici bistable. Elle est donc adaptée à être pilotée dans l'une ou l'autre de deux positions stables, à savoir :
- une position de fermeture dans laquelle elle obture totalement la ligne de préchauffage 50, de sorte que le débit d'air y est nul (à des fuites d'air près liées à l'étanchéité entre la vanne 51 et la paroi intérieure de la ligne de préchauffage 50 dans laquelle elle est montée), et
- une position d'ouverture dans laquelle elle libère totalement la ligne de préchauffage 50, de sorte que le débit d'air y est maximum.

La vanne commandée 51 est par exemple formée par un volet papillon, mais il pourrait bien entendu en être autrement.

On notera que la section de la vanne commandée 51 et/ou des conduites de la ligne de préchauffage 50 sont prévus de façon que le débit d'aspiration d'air (lors de l'ouverture de la vanne commandée 51) reste constant pendant une durée permettant au minimum de réchauffer le catalyseur 85 lors d'un démarrage à froid (par exemple à 0°C).

Comme le montre la figure 1, pour piloter les différents organes du moteur à combustion interne 1, il est prévu un calculateur 100 comportant un processeur (CPU), une mémoire vive (RAM), une mémoire morte (ROM), une interface d'entrée et de sortie de données.

Grâce à cette interface, le calculateur 100 est adapté à recevoir de différents capteurs des signaux d'entrée.

Parmi ces capteurs, il est notamment prévu un capteur de présence permettant au calculateur 100 de déterminer s'il est probable que le conducteur tente de démarrer le moteur dans un intervalle de temps réduit, ou si le conducteur commande effectivement ce démarrage.

Ce capteur de présence peut être prévu pour déterminer si le conducteur du véhicule s'approche du véhicule. Il peut par exemple s'agir d'une interface de communication (Wifi, Bluetooth^{®}...) adaptée à déterminer, par exemple, si le téléphone mobile du conducteur entre dans sa portée.

En variante ou en complément, le capteur de présence peut être prévu pour déterminer si le conducteur entre dans le véhicule. Il peut par exemple s'agir d'un capteur de position adapté à déterminer si la poignée de la portière du conducteur est manoeuvrée ou non.

En variante ou en complément, le capteur de présence peut être prévu pour déterminer si le conducteur est entré dans le véhicule. Il peut par exemple s'agir d'un capteur de poids adapté à déterminer si le conducteur est assis sur le siège conducteur ou non.

En variante ou en complément, le capteur de présence peut être prévu pour déterminer si le conducteur a inséré ou non sa clef de contact dans le logement prévu pour recevoir cette clef ou s'il a commandé le démarrage du moteur à combustion interne.

Il est par ailleurs prévu un ou plusieurs capteurs permettant de mesurer ou d'évaluer la température dans le catalyseur 85.

Il pourrait par exemple s'agir d'un capteur de température situé dans le, ou à proximité du, catalyseur 85.

En variante, il pourrait s'agir d'un capteur de température situé dans la ligne d'échappement ou à proximité de la chambre de combustion du moteur.

Encore en variante, il pourrait s'agir d'un capteur de régime-moteur connecté à une horloge, permettant d'évaluer la température du catalyseur 85 compte tenu du temps écoulé depuis le précédent arrêt du moteur.

En pratique, on considérera ici qu'il est prévu un capteur de température situé dans le catalyseur 85 et un autre situé dans le catalyseur électrique 84.

Également grâce à l'interface de communication, le calculateur 100 est adapté à transmettre des signaux de sortie aux différents organes du moteur, notamment à la vanne commandée 51 et à l'interrupteur commandée du catalyseur électrique 84.

Grâce à sa mémoire, le calculateur 100 mémorise une application informatique, constituée de programmes d'ordinateur comprenant des instructions dont l'exécution par le processeur permet la mise en oeuvre par le calculateur du procédé décrit ci-après.

Classiquement, lorsque le moteur est démarré, l'air frais prélevé dans l'atmosphère par la ligne d'admission 20 est filtré par le filtre à air 21, comprimé par le compresseur 22, refroidi par le refroidisseur d'air principal 23, puis brûlé dans les cylindres 11.

A leur sortie des cylindres 11, les gaz brûlés sont détendus dans la turbine 82, traités et filtrés dans le pot catalytique 83, puis détendus à nouveau dans le silencieux d'échappement 84 avant d'être rejetés dans l'atmosphère.

On note que la pression dans la ligne d'échappement 80 est telle que la vanne de mise à l'air libre 89 de la ligne de prise d'air 88 reste fermée.

Dès que le moteur est démarré et jusqu'à son extinction, la pompe à vide 40 fonctionne en continu de façon à établir une pression dans le servofrein 70 qui est inférieure à la pression atmosphérique.

De ce fait, si la pression d'air dans le réservoir 52 est supérieure à la pression dans l'entrée 41 de la pompe à vide 40, la vanne d'arrêt 53 s'ouvre, ce qui permet d'établir un vide d'air dans le réservoir 52. Cette vanne se ferme ensuite automatiquement.

En fonctionnement normal, le calculateur 100 pilote la vanne commandée 51 en position fermée, ce qui évite que des gaz brûlés n'entrent dans la ligne de préchauffage 50 (voir figure 1).

Dès lors, le fonctionnement du moteur à combustion interne 1 et du système de freinage est identique à celui qui est habituellement mis en oeuvre.

Lors de l'arrêt du moteur, la vanne commandée 51 et la vanne d'arrêt 53 de la ligne de préchauffage 50 permettent d'isoler le réservoir 52, de façon que la faible pression qui y règne reste constante.

L'invention permet alors, préalablement à un démarrage du moteur à froid, de réchauffer le catalyseur 85. Elle propose pour cela un procédé comprenant plusieurs étapes successives.

La première étape, lorsque le moteur à combustion interne 1 est à l'arrêt, consiste pour le calculateur 100 à chercher à détecter, grâce au capteur de présence, l'approche du conducteur ou son entrée dans le véhicule automobile.

Dès que l'approche ou l'entrée du conducteur est détectée, au cours d'une seconde étape, le calculateur 100 détermine la température du catalyseur 85.

Puis, au cours d'une troisième étape, le calculateur 100 compare cette température avec un seuil S1 prédéterminé. Ce seuil correspond préférentiellement à la température d'activation du catalyseur 85. Il est préférentiellement compris entre 150 et 350°C, et par exemple égal à 250°C.

Si la température du catalyseur 85 est supérieure ou égale à ce seuil de température, le calculateur 100 laisse la vanne commandée 51 de la ligne de préchauffage 50 en position fermée.

Dans le cas contraire, au cours d'une quatrième étape, le calculateur 100 commande l'alimentation en courant électrique du catalyseur électrique 84.

On notera sur la figure 3 que l'instant t1 correspond au moment de l'activation du catalyseur électrique 84 et que la courbe C1 correspond à l'état inactivé (0) ou activé (1) de ce catalyseur électrique 84.

En parallèle, le calculateur 100 continue de mesurer la température du catalyseur électrique 84 et celle du catalyseur 85. Ces deux températures sont respectivement illustrées par les courbes C4 et C3 sur la figure 3.

A l'instant t2, dès que la température du catalyseur électrique 84 dépasse un seuil de température prédéterminé (ici le seuil S1 précité), le calculateur 100 pilote au cours d'une cinquième étape l'ouverture de la vanne commandée 51, ce qui provoque une aspiration d'air dans la ligne d'échappement 80, en aval du catalyseur 85, et donc une baisse de pression.

On notera que sur la figure 3, la courbe C2 correspond à la position fermée (0) ou ouverte (1) de cette vanne commandée 51.

Cette ouverture de vanne permet à l'air provenant de l'extérieur d'être aspiré par la ligne de prise d'air 88, de traverser le catalyseur électrique 84 où il est réchauffé, puis de traverser le catalyseur 85 qu'il réchauffe. La flèche F1 sur la figure 2 illustre le trajet de l'air ainsi aspiré par le réservoir 52.

Dès lors, comme le montre la courbe C3 sur la figure 3, la température du catalyseur 85 augmente.

En parallèle, le calculateur continue de mesurer la température du catalyseur 85.

Dès qu'elle dépasse un seuil de température prédéterminé, ici encore le seuil S1, à l'instant t3, le calculateur 100 pilote au cours d'une sixième étape la fermeture de la vanne commandée 51.

A ce stade, on pourra prévoir de fermer l'interrupteur commandé du catalyseur électrique 84 ou, comme le montre la figure 3, de les laisser à ouvert pendant une période de temps supplémentaire pour accroître encore la température du système de post-traitement 83 tout entier.

A l'issue de cette sixième étape, le calculateur 100 autorise enfin le démarrage du moteur à combustion interne, dès que le conducteur en émet le souhait.

Si le conducteur ne requiert pas ce démarrage, la température du catalyseur 85 peut baisser. On peut alors prévoir que lorsqu'elle repasse sous un seuil de température prédéterminé (strictement inférieur au seuil S1), le catalyseur électrique 84 soit réactivé et que la vanne commandée 51 soit rouverte.

Une fois que le conducteur du véhicule automobile met le contact, le calculateur 100 commande le démarreur, les bougies et les injecteurs de carburant 64 pour que ceuxci démarrent le moteur à combustion interne 1.

Ce démarrage provoque une chute de pression dans la conduite d'air 71, grâce à la pompe à vide 40, ce qui permet à la vanne d'arrêt 53 (dont on rappelle qu'il s'agit d'un clapet anti-retour) de s'ouvrir automatiquement pour faire chuter à nouveau la pression dans le réservoir 52, en vue d'un démarrage ultérieur. La circulation de l'air dans la ligne de préchauffage 50 est alors illustrée sur la figure 2 par la flèche F2.

On notera que lorsque la voiture sort d'usine d'assemblage et que son moteur est démarré pour la première fois, la pression dans le réservoir 52 sera initialement égale à la pression atmosphérique, ce qui ne permettra pas de mettre en oeuvre l'invention. Pour éviter cela, on pourrait, lors de l'assemblage de la ligne de préchauffage 50, placer le réservoir 52 sous vide d'air.

La présente invention n'est nullement limitée au mode de réalisation décrit et représenté, mais l'homme du métier saura y apporter toute variante conforme à l'invention.

Dans une première variante, on pourrait prévoir que la ligne de prise d'air 88 soit piquée sur la ligne d'échappement 80 en aval du catalyseur 85, que le catalyseur électrique 84 soit situé entre cette ligne de prise d'air 88 et le catalyseur 85, et que la ligne de préchauffage 50 soit piquée sur la ligne d'échappement 80 en amont du catalyseur 85.

Dans une seconde variante, on pourrait prévoir qu'une résistance électrique soit placée sur la ligne de prise d'air 88. Dans cette variante, les moyens de chauffage des gaz seront considérés comme formés par la jonction entre la ligne d'échappement et la ligne de prise d'air.

Dans une autre variante de l'invention, on pourrait prévoir que la pompe à vide soit actionnée, non pas via le vilebrequin du moteur à combustion interne mais plutôt par un moteur électrique alimenté en courant par la batterie d'accumulateurs du véhicule. Dans cette variante, on pourra préférentiellement prévoir d'activer le moteur électrique pendant le fonctionnement du moteur à combustion interne, de façon à constituer la réserve de vide d'air sans que cela n'ait d'effet sur le niveau de charge de la batterie.

Dans une autre variante, on pourrait prévoir que l'invention ne soit mise en oeuvre que si le niveau de charge de la batterie est suffisant.

Encore en variante, on pourrait utiliser, en lieu et place du catalyseur électrique, une grille chauffante électrique placée en amont du catalyseur 85.

## Revendications

1. Moteur à combustion interne (1) comprenant :
- une chambre de combustion,
- une ligne d'admission (20) d'air frais débouchant dans la chambre de combustion,
- une ligne d'échappement (80) de gaz brûlés hors de la chambre de combustion, qui comprend au moins un catalyseur (85) et des moyens de chauffage des gaz situés d'un premier côté du catalyseur (85),
- une pompe à vide (40) qui comporte une entrée (41) et qui est adaptée à établir, dans ladite entrée (41), une pression d'air inférieure à la pression atmosphérique, **caractérisé en ce qu'**il comporte :
- une ligne de préchauffage (50) qui communique à une première extrémité avec ladite entrée (41) de la pompe à vide (40), qui débouche à une seconde extrémité dans la ligne d'échappement (80), d'un second côté du catalyseur (85), et qui comporte une réserve d'air (52) et des moyens d'isolation (51, 53) de la réserve d'air (52) aptes à ouvrir ou fermer la ligne de préchauffage (50) de part et d'autre de la réserve d'air (52), et
- une ligne de prise d'air (88) qui, à une extrémité, communique avec l'extérieur, et, à une autre extrémité, débouche dans la ligne d'échappement (80), du côté opposé au catalyseur (85) par rapport aux moyens de chauffage (84).

2. Moteur à combustion interne (1) selon la revendication 1, dans lequel les moyens de chauffage (84) fonctionnent à l'énergie électrique.

3. Moteur à combustion interne (1) selon la revendication 2, dans lequel les moyens de chauffage (84) comportent une tranche de catalyseur ayant un substrat métallique.

4. Moteur à combustion interne (1) selon la revendication 3, dans lequel la tranche de catalyseur présente un volume strictement inférieur à celui du catalyseur (85).

5. Moteur à combustion interne (1) selon l'une des revendications 1 à 4, dans lequel les moyens de chauffage (84) sont situés en amont du catalyseur (85).

6. Moteur à combustion interne (1) selon l'une des revendications 1 à 5, dans lequel la première extrémité de la ligne de préchauffage (50) débouche dans une conduite d'air (71) connectant l'entrée (41) de la pompe à vide (40) à un servofrein à dépression (70).

7. Véhicule automobile comportant des roues, un groupe motopropulseur et un système de freinage des roues qui comporte un servofrein à dépression (70), **caractérisé en ce que** le groupe motopropulseur comporte un moteur à combustion interne (1) conforme à l'une des revendications précédentes, dont la pompe à vide (40) est connectée au servofrein à dépression (70) par une conduite d'air (71).

8. Procédé de pilotage d'un moteur à combustion interne (1) d'un véhicule automobile conforme à la revendication 7, dans lequel il est prévu d'acquérir un premier paramètre relatif à l'approche ou à l'entrée du conducteur dans le véhicule automobile et un second paramètre relatif à la température du catalyseur (85) et dans lequel, lorsque le premier paramètre indique que le conducteur s'approche ou est entré dans le véhicule automobile et que le second paramètre indique que la température du catalyseur (85) est inférieure à un seuil prédéterminé, les moyens de chauffage (84) sont activés puis les moyens d'isolation (51, 53) ouvrent la ligne de préchauffage (50) entre la réserve d'air (52) et la ligne d'échappement (80).

9. Procédé de pilotage selon la revendication précédente, dans lequel, après que les moyens d'isolation (51, 53) ont ouvert la ligne de préchauffage (50) entre la réserve d'air (52) et la ligne d'échappement (80), il est prévu d'attendre que le second paramètre indique que la température du catalyseur (85) dépasse un seuil prédéterminé, puis de refermer la ligne de préchauffage (50) entre la réserve d'air (52) et la ligne d'échappement (80).

10. Procédé de pilotage selon la revendication précédente, dans lequel, après que les moyens d'isolation (51, 53) ont refermé la ligne de préchauffage (50) entre la réserve d'air (52) et la ligne d'échappement (80), les moyens d'isolation (51, 53) ouvrent la ligne de préchauffage (50) entre la réserve d'air (52) et la pompe à vide (40).

## Patentansprüche

1. Verbrennungsmotor (1), umfassend:
- einen Brennraum,
- eine Frischlufteinlassleitung (20), die in den Brennraum mündet,
- eine Abgasleitung (80) zur Abführung von Abgasen aus dem Brennraum, die mindestens einen Katalysator (85) und Mittel zur Erwärmung der Gase, die sich auf einer ersten Seite des Katalysators (85) befinden, umfasst,
- eine Vakuumpumpe (40), die einen Einlass (41) aufweist und die dazu eingerichtet ist, im Einlass (41) einen Luftdruck zu erzeugen, der niedriger als der atmosphärische Druck ist,
**dadurch gekennzeichnet, dass** er aufweist:
- eine Vorwärmleitung (50), die an einem ersten Ende mit dem Einlass (41) der Vakuumpumpe (40) in Verbindung steht, die an einem zweiten Ende auf einer zweiten Seite des Katalysators (85) in die Abgasleitung (80) mündet und die eine Luftreserve (52) und Mittel zur Isolation (51, 53) der Luftreserve (52), die geeignet sind, die Vorwärmleitung (50) beiderseits der Luftreserve (52) zu öffnen oder zu schließen, aufweist, und
- eine Luftzufuhrleitung (88), die an einem Ende mit der Außenumgebung in Verbindung steht und an einem anderen Ende auf der dem Katalysator (85) bezüglich der Mittel zur Erwärmung (84) gegenüberliegenden Seite in die Abgasleitung (80) mündet.

2. Verbrennungsmotor (1) nach Anspruch 1, wobei die Mittel zur Erwärmung (84) mit elektrischer Energie funktionieren.

3. Verbrennungsmotor (1) nach Anspruch 2, wobei die Mittel zur Erwärmung (84) einen Katalysatorabschnitt mit einem metallischen Substrat aufweisen.

4. Verbrennungsmotor (1) nach Anspruch 3, wobei der Katalysatorabschnitt ein Volumen aufweist, das streng kleiner als dasjenige des Katalysators (85) ist.

5. Verbrennungsmotor (1) nach einem der Ansprüche 1 bis 4, wobei sich die Mittel zur Erwärmung (84) stromaufwärts des Katalysators (85) befinden.

6. Verbrennungsmotor (1) nach einem der Ansprüche 1 bis 5, wobei das erste Ende der Vorwärmleitung (50) in eine Luftleitung (71) mündet, die den Einlass (41) der Vakuumpumpe (40) mit einem Unterdruck-Bremskraftverstärker (70) verbindet.

7. Kraftfahrzeug, welches Räder, einen Antriebsstrang und ein Radbremssystem, das einen Unterdruck-Bremskraftverstärker (70) aufweist, umfasst, **dadurch gekennzeichnet, dass** der Antriebsstrang einen Verbrennungsmotor (1) gemäß einem der vorhergehenden Ansprüche aufweist, dessen Vakuumpumpe (40) mit dem Unterdruck-Bremskraftverstärker (70) durch eine Luftleitung (71) verbunden ist.

8. Verfahren zur Steuerung eines Verbrennungsmotors (1) eines Kraftfahrzeugs gemäß Anspruch 7, wobei vorgesehen ist, einen ersten Parameter, der sich auf die Annäherung oder den Einstieg des Fahrers in das Kraftfahrzeug bezieht, und einen zweiten Parameter, der sich auf die Temperatur des Katalysators (85) bezieht, zu erfassen, und wobei, wenn der erste Parameter anzeigt, dass sich der Fahrer nähert oder in das Kraftfahrzeug eingestiegen ist, und der zweite Parameter anzeigt, dass die Temperatur des Katalysators (85) niedriger als ein vorbestimmter Schwellenwert ist, die Mittel zur Erwärmung (84) aktiviert werden und danach die Mittel zur Isolation (51, 53) die Vorwärmleitung (50) zwischen der Luftreserve (52) und der Abgasleitung (80) öffnen.

9. Verfahren zur Steuerung nach dem vorhergehenden Anspruch, wobei, nachdem die Mittel zur Isolation (51, 53) die Vorwärmleitung (50) zwischen der Luftreserve (52) und der Abgasleitung (80) geöffnet haben, vorgesehen ist zu warten, bis der zweite Parameter anzeigt, dass die Temperatur des Katalysators (85) einen vorbestimmten Schwellenwert überschreitet, und danach Vorwärmleitung (50) zwischen der Luftreserve (52) und der Abgasleitung (80) wieder zu schließen.

10. Verfahren zur Steuerung nach dem vorhergehenden Anspruch, wobei, nachdem die Mittel zur Isolation (51, 53) die Vorwärmleitung (50) zwischen der Luftreserve (52) und der Abgasleitung (80) wieder geschlossen haben, die Mittel zur Isolation (51, 53) die Vorwärmleitung (50) zwischen der Luftreserve (52) und der Vakuumpumpe (40) öffnen.

## Claims

1. Internal combustion engine (1) comprising:
- a combustion chamber,
- a fresh air intake line (20) that opens into the combustion chamber,
- an exhaust line (80) for exhausting burnt gases from the combustion chamber, which comprises at least one catalyst (85) and means for heating the gases that are situated on a first side of the catalyst (85),
- a vacuum pump (40) that has an inlet (41) and that is designed to establish, in said inlet (41), an air pressure below atmospheric pressure, **characterized in that** it has:
- a preheating line (50) that communicates at a first end with said inlet (41) of the vacuum pump (40), which opens at a second end into the exhaust line (80), on a second side of the catalyst (85), and that has an air reserve (52) and means (51, 53) for isolating the air reserve (52) that are able to open or close the preheating line (50) on either side of the air reserve (52), and
- an air intake line (88) that, at one end, communicates with the outside, and, at another end, opens into the exhaust line (80), on the side opposite the catalyst (85) with respect to the heating means (84).

2. Internal combustion engine (1) according to Claim 1, wherein the heating means (84) operate using electrical energy.

3. Internal combustion engine (1) according to Claim 2, wherein the heating means (84) have a catalyst support having a metal substrate.

4. Internal combustion engine (1) according to Claim 3, wherein the catalyst support has a volume strictly smaller than that of the catalyst (85).

5. Internal combustion engine (1) according to one of Claims 1 to 4, wherein the heating means (84) are situated upstream of the catalyst (85).

6. Internal combustion engine (1) according to one of Claims 1 to 5, wherein the first end of the preheating line (50) opens into an air duct (71) connecting the inlet (41) of the vacuum pump (40) to a vacuum brake booster (70).

7. Motor vehicle having wheels, a powertrain and a wheel braking system that has a vacuum brake booster (70), **characterized in that** the powertrain has an internal combustion engine (1) in accordance with one of the preceding claims, of which the vacuum pump (40) is connected to the vacuum brake booster (70) by an air duct (71) .

8. Method for controlling an internal combustion engine (1) of a motor vehicle in accordance with Claim 7, wherein provision is made to acquire a first parameter relating to the approach or entry of the driver (in)to the motor vehicle and a second parameter relating to the temperature of the catalyst (85) and wherein, when the first parameter indicates that the driver is approaching or has entered the motor vehicle and the second parameter indicates that the temperature of the catalyst (85) is lower than a predetermined threshold, the heating means (84) are activated and then the isolation means (51, 53) open the preheating line (50) between the air reserve (52) and the exhaust line (80).

9. Control method according to the preceding claim, wherein, after the isolation means (51, 53) have opened the preheating line (50) between the air reserve (52) and the exhaust line (80), provision is made to wait for the second parameter to indicate that the temperature of the catalyst (85) exceeds a predetermined threshold, and then to close the preheating line (50) between the air reserve (52) and the exhaust line (80) again.

10. Control method according to the preceding claim, wherein, after the isolation means (51, 53) have closed the preheating line (50) between the air reserve (52) and the exhaust line (80) again, the isolation means (51, 53) open the preheating line (50) between the air reserve (52) and the vacuum pump (40).
